(19) Europäisches Patentamt

European Patent Office

Office européen des brevets

(11) **EP 0 762 929 B1**

(12) **EUROPÄISCHE PATENTSCHRIFT**

(45) Veröffentlichungstag und Bekanntmachung des Hinweises auf die Patenterteilung:
**21.02.2001   Patentblatt 2001/08**

(21) Anmeldenummer: **95920899.2**

(22) Anmeldetag: **26.05.1995**

(51) Int Cl.$^7$: **B01D 71/10**, C08B 15/00

(86) Internationale Anmeldenummer:
**PCT/EP95/02009**

(87) Internationale Veröffentlichungsnummer:
**WO 95/32793 (07.12.1995 Gazette 1995/52)**

(54) **HYDROPHILE, PORÖSE MEMBRANEN AUS VERNETZTEM CELLULOSEHYDRAT, VERFAHREN ZU IHRER HERSTELLUNG UND IHRE VERWENDUNG**

HYDROPHILIC POROUS MEMBRANES MADE OF CROSS-LINKED CELLULOSE HYDRATE, METHOD OF PRODUCING THEM AND THEIR USE

MEMBRANES POREUSES HYDROPHILES EN HYDRATE DE CELLULOSE RETICULE, LEUR PROCEDE DE PRODUCTION ET LEUR UTILISATION

(84) Benannte Vertragsstaaten:
**DE ES FR GB IT NL**

(30) Priorität: **30.05.1994   DE 4418832**
                **30.05.1994   DE 4418831**

(43) Veröffentlichungstag der Anmeldung:
**19.03.1997   Patentblatt 1997/12**

(73) Patentinhaber: **SARTORIUS AG**
**37075 Göttingen (DE)**

(72) Erfinder:
• **BEER, Hans**
  **D-37136 Bösinghausen (DE)**
• **DEMMER, Wolfgang**
  **D-37077 Göttingen (DE)**
• **HÖRL, Hans-Heinrich**
  **D-37120 Bovenden (DE)**
• **MELZNER, Dieter**
  **D-37075 Göttingen (DE)**
• **NUSSBAUMER, Dietmar**
  **D-37079 Göttingen (DE)**
• **SCHMIDT, Hans-Weddo**
  **D-37181 Hardegsen (DE)**
• **WÜNN, Eberhard**
  **D-37077 Roringen (DE)**

(56) Entgegenhaltungen:
EP-A- 0 145 127        GB-A- 757 386
US-A- 3 091 617        US-A- 3 428 584
US-A- 4 175 183        US-A- 4 459 392

**Beschreibung**

Die Erfindung betrifft hydrophile, poröse Membranen aus vernetztem Cellulosehydrat, ein Verfahren zu ihrer Herstellung und die Verwendung der Membranen zur Filtration wässriger Medien.

Die erfindungsgemäßen porösen Membranen zeichnen sich gegenüber Membranen des Standes der Technik durch eine hohe Leistungsfähigkeit und Lebensdauer bei Trennprozessen in Bereichen der Getränke-und Lebensmittelindustrie, des Umweltschutzes, der chemischen und pharmazeutischen Industrie und der Medizintechnik aus.. Sie sind gegen Laugen, Säuren und Cellulasen beständig. Das Verfahren zur Herstellung der Membranen ist kostengünstig und umweltfreundlich.

Zu den porösen Membranen rechnet man Revers-Osmose-, Ultra- und Mikrofiltrationsmembranen, bei denen der Filtrationsprozeß durch eine hydrostatische Druckdifferenz als treibende Kraft erfolgt. Ultrafiltrationsmembranen sind durch Porengrößen charakterisiert, die sie zur Rückhaltung von Makromolekülen, etwa im Molmassenbereich zwischen 500 und 1 000 000 Daltons befähigen, während Mikrofiltrationsmembranen wirksame Porengrößen im Bereich zwischen etwa 0,01 und 10 µm aufweisen. Revers-Osmosemembranen sind durch Porengrößen charakterisiert, die die Rückhaltung auch von Molekülen und Ionen unterhalb einer Größe von etwa 500 Daltons bewirken. Revers-Osmosemembranen sind nicht Gegenstand der Erfindung.

Cellulosehydratmembranen sind bekannt und weisen eine einzigartige Kombination vorteilhafter Eigenschaften auf, wie Hydrophilie, die sich in ihrer Wasserbenetzbarkeit ohne Verwendung von Tensiden ausdrückt, geringe Proteinadsorption, hohe thermische Beständigkeit, Beständigkeit gegenüber den meisten organischen Lösungsmitteln und eine hohe Flexibilität.

Der breiten Anwendung von Cellulosehydratmembranen stehen jedoch in vielen Bereichen, vorwiegend bei der Filtration wäßriger Systeme, entscheidende anwendungstechnische Nachteile entgegen, nämlich die Unbeständigkeit gegen starke Laugen, starke Säuren und Cellulasen sowie die Freisetzung sogenannter "Pseudopyrogene".

Der Angriff von Alkalien auf Cellulosehydratmembranen ist in erster Linie durch Schrumpfungs- und Quellungsvorgänge bis hin zur Auflösung der Membranen gekennzeichnet, wobei hohe Temperaturen chemischen Abbau und Schrumpfungsvorgänge begünstigen, niedrige Temperaturen, insbesondere in Verbindung mit hohen Alkalikonzentrationen, Quellung und Auflösung. Die Alkaliempfindlichkeit von Cellulosehydratmembranen ist besonders dann ein entscheidender Nachteil, wenn für die Reinigung der Membranen zur Wiederherstellung ihrer vollen Leistungsfähigkeit nach Gebrauch stark alkalische Reinigungsmedien erforderlich sind.

Der Angriff von Säuren an Cellulosehydratmembranen führt zu einem Abbau der Cellulose bis hin zur Glucose. In der Praxis kann eine Säureschädigung in erster Linie bei der Verwendung stark saurer Reinigungsmedien auftreten. Bei hohen Temperaturen führen auch schwache organische Säuren zur Zerstörung von Cellulosehydratmembranen. Wenn beispielsweise nach der Filtration von Wein, der organische Säuren enthält, ohne ausreichende Spülung eine Dampfsterilisation durchgeführt wird, kann die Cellulosehydratmembran infolge der restlichen organischen Säuren einen Festigkeitsverlust bis hin zur Zerstörung erleiden.

Der Abbau durch Cellulasen kann bei einem Keimbefall der Membranen, wie er bei Stillstandszeiten im nichtsterilisierten Zustand auftritt, ebenfalls zu einer völligen Zerstörung von Cellulosehydratmembranen führen.

Die Abgabe von Pseudopyrogenen, also von Substanzen, die zwar physiologisch keine pyrogene (fiebererzeugende) Wirkung haben, jedoch mit manchen am Markt befindlichen Limulus-Lysaten (z.B. Pyrogel, Concept) zu falsch positiven Testergebnissen führen, steht der Anwendung von Cellulosehydratmembranen bei der Filtration von pharmazeutischen Produkten entgegen. Besonders störend ist dabei, daß sich die Pseudopyrogene, bei denen es sich vermutlich um Celluloseabbauprodukte handelt, zwar mit Wasser ausspülen lassen, nach jeder Hitzesterilisation (Autoklavierung oder Bedampfung) aber von neuem auftreten.

Aus der Textilindustrie ist seit langem bekannt, daß man durch eine Vernetzung der Cellulose Eigenschaftsverbesserungen erreichen kann. Die Vernetzung von Cellulose (native Cellulose/Cellulosehydrat/Regeneratcellulose) durch Reaktion eines Vernetzungsmittels mit den Hydroxylgruppen der Glucoseeinheiten wurde insbesondere an Baumwolle und Regeneratfasern intensiv erforscht (Kirk-Othmer's Encyclopädia of Chemical Technology, Vol. 22, 3. Auflage, Wiley N.Y. 1983, Seiten 770-790). Versuche zur Übertragung dieser Techniken auf die Membranherstellung haben bisher nicht zu allseits befriedigenden Ergebnissen geführt.

So erhält man zwar nach der EP-A2 0 145 127 aus Cellulosehydrat-Ultrafiltrationsmembranen vernetzte Ultrafiltrationsmembranen, jedoch weisen die vernetzten Membranen gegenüber den Ausgangsmembranen einen erheblichen Rückgang ihrer Hydrophilie auf Sie eignen sich für die Abtrennung organischer Flüssigkeiten aus nichtwässrigen Lösungen und haben gegenüber organischen Flüssigkeiten eine verbesserte Rückhaltefahigkeit. Als Vernetzungsmittel werden bifunktionelle Verbindungen aus den Gruppen Bis(2-hydroxyethyl)sulfon, Dimethyldichlorsilan, Epichlorhydrin, Formaldehyd, Dimethylolharnstoff, Dimethylolethylenharnstoff und Diisocyanate genannt. Die Vernetzung wird durchgeführt, indem die Membran aus Cellulosehydrat mit einer 5-30 %igen Lösung des Vernetzungsmittels bei 20-110° C über einen Zeitraum von ungefähr 30-300 Minuten in Kontakt gebracht wird.

Nachteilig ist die erhebliche Verminderung der Hydrophilie der vernetzten Cellulosehydratmembranen, wodurch ihr Anwendungsbereich für Trennaufgaben in wässrigen Medien eingeschränkt ist. Außerdem geht mit zunehmender Vernetzung die Durchflußleistung der Membranen deutlich zurück, teilweise auf ein Fünftel der Durchflußleistung bezogen auf die unvernetzte Cellulosehydratmembran. Die Vernetzung mit Epoxiden (Epichlorhydrin) erfordert wegen der geringen Wasserlöslichkeit die Anwendung organischer Lösungsmittel, wodurch das Verfahren außerdem kostenintensiv ist.

Der Erfindung liegt daher die Aufgabe zugrunde, poröse Membranen aus Cellulosehydrat so zu modifizieren, daß ihre Hydrophilie, ihre hohe Flußleistung und die geringe Proteinadsorption nach der Modifizierung erhalten bleiben und die modifizierten Membranen eine erhöhte Beständigkeit gegen Laugen, Säuren und Cellulasen aufweisen und möglichst keine Pseudopyrogene abgeben sowie ein kostengünstiges, umweltfreundliches Verfahren zur Herstellung solcher Membranen und Verwendungen der Membranen aufzufinden, bei denen ihre vorteilhaften Eigenschaften wirksam werden.

Die Aufgabe wird durch poröse Membranen aus vernetztem Cellulosehydrat gelöst, die mit einem Diepoxid vernetzt sind, wobei das Diepoxid über eine Wasserlöslichkeit von mindestens 0.2 mol/l verfügen muß und vorzugsweise mit Wasser vollständig mischbar ist, sowie durch ein Verfahren, das gekennzeichnet ist durch die Auswahl von Diepoxiden der vorstehend genannten Wasserlöslichkeit. Die Membranen können für alle Ultra- und Mikrofiltrationsaufgeben, bei denen sowohl eine niedrige Proteinadsorption als auch eine hohe chemische Beständigkeit der Membran erforderlich ist, verwendet werden.

Ein für die Ausführung der Erfindung bevorzugtes wasserlösliches Diepoxid ist beispielsweise 5-Ethyl-1,3-Diglycidyl-5-Methylhydantoin.

Ein geeigneter Schnelltest zur Beurteilung der Alkalistabilität von Cellulosehydratmembranen besteht darin, daß nach einer einstündigen Behandlung mit 10 %iger Natronlauge bei 7°C der Massenverlust, die Quellung (Flächenzunahme) und die Abnahme der Durchflußleistung für Wasser bestimmt werden. Im unvernetzten Zustand ist Cellulosehydrat unter diesen Bedingungen praktisch vollständig löslich.

Als Maß für den Vernetzungsgrad (VG) wird der mittlere Substitutionsgrad der Anhydroglucose-Einheiten der Cellulose durch Reaktion mit dem Diepoxid gewählt, der unter der vereinfachenden Annahme, daß jede der beiden Epoxidgruppen mit der Cellulose reagiert (prinzipiell ist auch eine Einfachreaktion möglich), aus der Massenzunahme bei der Vernetzung bestimmt werden kann. Der theoretisch maximal mögliche Wert von VG liegt aufgrund der drei Hydroxylgruppen der Anhydroglucose bei 3. Aus der Molmasse der Anhydroglucose von 162 Dalton, der Molmasse des Diepoxids $M_v$ in Dalton und der Massenzunahme dM in % der Ausgangsmasse ergibt sich für den Vernetzungsgrad folgende Beziehung:

$$VG = 3.24 * dM/M_v$$

Es wurde gefunden, daß die Beständigkeit gegen Laugen, Säuren und Cellulasen mit dem Grad der Vernetzung der Cellulosehydratmembranen zunimmt, wobei bei einem Vernetzungsgrad von 0.05 - 0.4 die erfindungsgemäßen vernetzten Cellulosehydratmembranen bei dem obigen Schnelltest mit kalter Natronlauge einen Massenverlust von weniger als 10 % erleiden, die Flächenzunahme durch Quellung weniger als 50 % des Ausgangswerts beträgt und die Durchflußleistung für Wasser mindestens 50 % des Ausgangswertes beträgt. Außerdem wurde festgestellt, daß die Membranen eine derartige Stabilität gegen alkalische Reinigungsmittel unter Praxisbedingungen aufweisen, die den Anforderungen genügt.

Selbstverständlich beziehen sich im Falle von verstärkten Membranen die angegebenen Werte für die Massenzu- und abnahmen auf den reinen Cellulosehydratanteil der verstärkten Membranen und außerdem kann die Flächenzunahme durch Quellung nur bei unverstärkten Membranen als Kriterium herangezogen werden.

Bei einer 15 minütigen Behandlung mit kochender, 1 normaler Schwefelsäure zerfallen unvernetzte Cellulosehydratmembranen vollständig, während die erfindungsgemäßen Membranen dabei einen Massenverlust von weniger als 5 % erleiden. Als Schnelltest für die Säurebeständigkeit von Cellulosehydratmembranen kommt dieses Kriterium jedoch nicht in Frage, weil zu wenig vernetzte Membranen trotz geringen Massenverlustes stark in ihrer mechanischen Festigkeit geschädigt sein können. Es hat sich jedoch gezeigt, daß der Schnelltest auf Alkalibeständigkeit auch mit der mechanischen Festigkeit nach Säureeinwirkung korreliert.

Die Beständigkeit gegen enzymatischen Angriff ist schon bei Vernetzungsgraden unterhalb von 0.05 gegeben, sodaß die erfindungsgemäßen Membranen in jedem Fall beständig gegen Cellulasen sind.

Ein besonders günstiger Bereich für den Vernetzungsgrad liegt zwischen 0.12 und 0.25, wobei sich für den Massenverlust nach dem Schnelltest mit kalter Natronlauge Werte von unter 5 %, für die Quellung von unter 15 % und für die Wasser-Durchflußleistung von mindestens 80 % des Ausgangswerts ergeben. Außerdem ist praktisch keine Abgabe von Pseudopyrogenen mehr zu beobachten.

Bei höheren Vernetzungsgraden als 0.4 nimmt die Flexibilität der vernetzten Membranen deutlich ab. so daß ihre Verarbeitung schwierig und dadurch kostenungünstig wird. Diese Verminderung der Flexibilität äußert sich in einer Knickbruchempfindlichkeit im trockenen, im Extremfall auch im nassen Zustand. Innerhalb des angegebenen Bereichs für die Massenzunahme tritt bei Mikrofiltrationsmembranen eine Zunahme des Durchflusses für Wasser von bis zu 20 % auf. Bei Ultrafiltrationsmembranen kann eine Durchflußverminderung von bis zu 50 % eintreten, die jedoch von einer entsprechenden Steigerung des Rückhaltevermögens für Proteine begleitet ist. Dem wird dadurch Rechnung getragen, daß zur Herstellung einer vernetzten Cellulosehydrat-Ultrafiltrationsmembran einer bestimmten Trenngrenze von einer entsprechend groberporigen unvernetzten Membran ausgegangen wird.

Versucht man bei Membranen des Standes der Technik, durch einen geringeren Vernetzungsgrad den Rückgang der Hydrophilie zu verhindern, erweist sich die Membran als nicht beständig gegen starke Laugen und Säuren, während die Beständigkeit gegen Cellulasen, wie erwähnt, auch bei niedrigen Vernetzungsgraden erreicht wird.

Überraschenderweise wurde gefunden, daß bei Verwendung wasserlöslicher Diepoxide als Vernetzungsmittel selbst hohe Vernetzungsgrade, also auch solche von über 0.4, von keiner Beeinträchtigung der Hydrophilie begleitet sind. Zur Beurteilung wurde die Zeit bestimmt, die ein auf die Membran aufgeträufelter Wassertropfen benötigt, bis er von der Membran aufgesogen wird. Zwischen der Ausgangsmembran aus Cellulosehydrat und der erfindungsgemäßen Membran aus vernetztem Cellulosehydrat wurde praktisch kein Unterschied festgestellt. Es wurde gefunden, daß die Hydrophilie erhalten bleibt, wenn das Vernetzungsmittel ausreichend wasserlöslich ist. Das gleiche gilt für das geringe Adsorptionsvermögen für Proteine, das bei den vernetzten erfindungsgemäßen Membranen gegenüber den unvemetzten Ausgangsmembranen nicht erhöht wird.

Ohne durch diesen Erklärungsversuch die Erfindung in irgendeiner Weise einzuschränken, wird angenommen, daß diese besonders vorteilhaften Auswirkungen eines wasserlöslichen Vernetzers, nämlich die Beibehaltung sowohl der hohen Hydrophilie als auch der niedrigen Proteinadsorption, durch die Hydrophilie des Vemetzters selbst bewirkt werden, deren weitere Folge seine Wasserlöslichkeit ist. Dementsprechend werden vollständig wassermischbare Vernetzer besonders bevorzugt.

Das Verfahren zur Durchführung der Vernetzung kann bei Mikrofiltrationsmembranen entweder in einem Trokken- oder in einem Naßprozeß ausgeführt werden, bei Ultrafiltrationsmembranen nur nach dem Naßprozeß und ist gekennzeichnet durch die Anwendung einer wäßrigen Vernetzungsflotte, die eine 0.2 bis 2 molare, vorzugsweise 0.28 bis 0.80 molare Lösung des Diepoxids als Vernetzer darstellt und 0.05 bis 0.3 Äquivalente/Liter, vorzugsweise 0.1 bis 0.2, einer starken Lauge, vorzugsweise Natronlauge als Katalysator enthält. Nach der Vernetzung wird die Membranbahn mit Wasser gespült, wobei vorzugsweise das erste Spülbad leicht sauer ist und beispielsweise aus 5 %iger Essigsäure besteht. Ultrafiltrationsmembranenen werden vor der Trocknung in üblicher Weise mit Glycerin imprägniert, um die volle Durchflußleistung zu erhalten, beispielsweise mit einer 40 %igen wäßrigen Lösung. Eine Glycerinimprägnierung kann auch bei Mikrofiltrationsmembranen erfolgen, ist aber in diesem Fall nicht für die Erhaltung der Durchflußleistung erforderlich.

Bei dem Naßprozeß enthält die Vernetzungsflotte vorzugsweise außerdem ein anorganisches Salz. beispielsweise Natriumsulfat, bis zu maximal der Konzentration, die zu einer Trübung der Vernetzungsflotte infolge Aussalzung des Diepoxids führt. Er ist gekennzeichnet durch eine Reaktionstemperatur zwischen 0 und 50°C, wobei Raumtemperatur bevorzugt wird, und eine Reaktionszeit bei Raumtemperatur von 5 bis 96, vorzugsweise 48 bis 72 Stunden. Die Einwirkung der Vernetzungsflotte auf die Membranbahn kann in einem Bad der Vernetzungsflotte (Badverfahren) oder vorzugsweise durch Imprägnierung der Membranbahn mit der Vemetzungsflotte und anschließende Lagerung der imprägnierten Bahn bei Reaktionstemperatur erfolgen (Imprägnierverfahren). Bei der Lagerung der imprägnierten Rollen werden Maßnahmen zur Vermeidung des Eintrocknens getroffen, beispielsweise durch Einschlagen in eine Kunststofffolie. Durch eine Lagerung unter langsamer Rotation kann einer ungleichmäßigen Verteilung der Vemetzungsflotte innerhalb der Rolle infolge der Schwerkraft begegnet werden.

Im Unterschied zu Mikrofiltrationsmembranen können Ultrafiltrationsmembranen nicht im trockenen, sondern nur im wasserfeuchten Zustand mit der Vemetzungsflotte imprägniert werden, weil sie andernfalls irreversibel geschädigt würden. Die Imprägnierung einer Membranbahn erfolgt in diesem Fall in mehreren Passagen unter Nachdosierung des Diepoxids, der Lauge und gegebenenfalls des Neutralsalzes, bis die Konzentration der Vernetzungsflotte konstant bleibt, was zweckmäßigerweise durch Dichtemessung kontrolliert wird.

Die Lauge katalysiert bei dem Naßprozeß nicht nur die Reaktion des Diepoxids mit der Cellulose, sondern unter Inaktivierung auch die mit Wasser. Für die Reaktionsausbeute bezogen auf eingesetztes Diepoxid, die aus wirtschaftlichen Gründen möglichst hoch sein soll, ist in erster Linie die Laugenkonzentration, sowie das Verhältnis von Flottenvolumen zur Membranfläche von Bedeutung, während die Reaktionszeit vorzugsweise so gewählt wird, daß am Ende praktisch das gesamte Diepoxid verbraucht ist. Dieses ist auch in Hinblick auf den Umweltschutz wirtschaftlich, weil sich dann beim Spülvorgang eine Nachbehandlung des Abwassers zur Vernichtung wassergefährdenden Restepoxids erübrigt. Das Imprägnierverfahren wird deshalb bevorzugt, weil es nicht nur in der Durchführung einfach ist, sondern auch das Verhältnis von Flottenvolumen zu Membranfläche mit etwa 200 bis 250 ml/m$^2$ besonders günstig ist.

Der Zusatz eines Neutralsalzes zur Vernetzungsflotte steigert die Reaktionsausbeute deutlich, d.h. in Gegenwart des Neutralsalzes kann der gleiche Vernetzungsgrad schon bei einer niedrigeren Konzentration des Vernetzers erreicht werden, als ohne, wodurch die Wirtschaftlichkeit des Verfahrens erhöht wird. Nach welchem Mechanismus diese Ausbeuteerhöhung erfolgt, d.h. ob in Gegenwart des Neutralsalzes die Reaktion mit Wasser verzögert oder die mit Cellulose beschleunigt wird, ist dabei ungeklärt.

Die Wasserlöslichkeit des Vernetzters ist auch verfahrenstechnisch von entscheidender Bedeutung, weil andernfalls die Vernetzung nicht im homogenen, wäßrigen Medium oder nicht in einem einzigen Schritt ausgeführt werden könnte. Dieses erklärt sich daraus, daß zur Erreichung des erforderlichen Vernetzungsgrades von mindestens 0.05 während der Vernetzung die angegebene Mindestkonzentration an Diepoxid von 0.2 M erforderlich ist. Beim Naßprozeß führt eine Verlängerung der Reaktionszeit über das angegebene Maß hinaus oder eine Erhöhung der Alkalikonzentration wegen der erwähnten Nebenreaktion mit Wasser zu keiner Erhöhung des Vernetzungsgrades. Eine Weiterführung der Reaktion wäre nach dieser Zeit also nur durch Erneuerung der Vernetzungsflotte möglich.

Wird hingegen, wie nach dem Stand der Technik, ein nur wenig wasserlöslicher Vernetzer, wie beispielsweise Epichlorhydrin, benutzt, kann in einem wäßrigen Medium ein hoher Vernetzungsgrad nur in einem zweiphasigen System erreicht werden, wobei der verbrauchte oder inaktivierte Vernetzer aus der organischen Phase nachgeliefert wird. Derartige zweiphasige Systeme sind jedoch technisch schwer zu handhaben und insbesondere beim bevorzugten Imprägnierverfahren ist es praktisch nicht möglich, eine über die Membranbahn gleichmäßige Vernetzung zu erreichen.

Beim Trockenprozeß wird die Membran mit der Vernetzungsflotte imprägniert und mit oder ohne Zwischentrocknung 30 Sekunden bis 10 Minuten auf eine Temperatur zwischen 80 und 150°C, vorzugsweise zwischen 100 und 120°C erhitzt. Der Trockenprozeß ermöglicht wegen der kurzen Reaktionszeiten eine kontinuierliche Vernetzung von Mikrofiltrationsmembranen.

Die erfindungsgemäßen Membranen aus vernetztem Cellulosehydrat können als Flach-. Hohlfaser- und Rohrmembran hergestellt werden und in entsprechenden Modulen eingebaut werden. Erfindungsgemäße Flachmembranen eignen sich zur Plissierung. Die erfindungsgemäßen Membranen können verstärkt oder unverstärkt hergestellt werden, wobei sowohl Vliese als auch Gewebe als Verstärkungsmaterial verwendet werden können. Bei den verstärkten Membranen bezieht sich die Massenzunahme durch Vernetzung nicht auf das Verstärkungsmaterial, sofern dieses nicht seinerseits aus Cellulose besteht. Bei Verwendung von Verstärkungsmaterialien auf Cellulosebasis werden diese bei der Behandlung mitvernetzt.

Der Anwendungsbereich der erfindungsgemäßen Membranen erstreckt sich auf alle Ultra- und Mikrofiltrationsaufgaben, bei denen sowohl eine niedrige Proteinadsorption als auch eine hohe chemische Beständigkeit der Membranen sowie eine geringe Abgabe von Pseudopyrogenen erforderlich ist.

Das ist beispielsweise für die Filtration wässriger Medien biologischen und biotechnologischen Ursprungs der Fall. Biotechnologisch hergestellte wässrige Medien und Getränke enthalten zahlreiche Stoffe, die die Membranen während oder nach dem Filtrationsprozeß mechanisch und chemisch angreifen oder durch Ablagerung auf der Oberfläche zu einer unerwünschten Abnahme der Filtrationsleistung führen können.So stellt beispielsweise Maische, die durch Filtration in klare Bierwürze und unlösliche Stoffe zu trennen ist, ein Gemisch von Hülsen, unlöslichen und löslichen Proteinen, Fetten, Polyphenolen, anderen unlöslichen Komponenten aus Rohstoffen, Wasser und löslichen Extrakten, die aus Stärke gewonnen werden, dar. Diese Stoffe greifen Membranen aus polymeren Werkstoffen an oder neigen zur Deckschichtbildung durch Adsorption von Inhaltsstoffen an der Membran, die üblicherweise zur raschen Abnahme der Filtrationsleistung führt.

Bei der Bierherstellung müssen die verwendeten Membranen die anfallenden Trübstoffe und Hefen und die für das Bier schädlichen Mikroorganismen entfernen, gleichzeitig aber dürfen sie die Geruchs- Geschmacks- und Fremdstoffneutralität des Bieres nicht beeinträchtigen, was z.B. durch eine teilweise verblockte Membraen leicht erfolgen kann. Mikroorganismen und insbesondere Enzyme, die in unterschiedlichster Form in biotechnologisch hergestellten Medien und Getränken vorkommen, dürfen die verwendeten Membranmaterialien nicht angreifen. Verwendet man Membranen aus Cellulosehydrat, so kann ein Keimbefall der Membranen durch freigesetzte Cellulasen, wie er bei Stillstandszeiten im nichtsterilisierten Zustand durchaus auftritt, zu einer völligen Zerstörung von Membranen aus Cellosehydrat führen. Wein enthält den Filtrationsprozeß erschwerende Polyphenole, aber vor allem auch organische Säuren. Wenn beispielsweise nach der Filtration von Wein ohne ausreichende Spülung eine Dampfsterilisation durchgeführt wird, kann die Cellulosehydratmembran infolge der restlichen organischen Säuren einen Festigkeitsverlust bis hin zur Zerstörung erleiden.

Es wurde nun gefunden, daß die vernetzten Cellulosehydratmembranen mit einer Porengröße im Bereich von 0.01 um bis 10 μm, bevorzugt von 0.1 μm bis 0.8 μm für die Filtration biologischer und biotechnologisch hergestellter flüssiger Medien und Getränke, insbesondere für die Maische-, Bier- und Weinfiltration besonders gut geeignet sind und die Realisierung von Filtrationsverfahren hoher Wirtschaftlichkeit gestatten, denn es erwies sich, daß die erfindungsgemäßen Membranen eine hohe Flußleistung für derartige Medien zeigten, durch ihre geringe Neigung zur Adsorption eine geringe Neigung zur Verblockung bei Anwesenheit von Polyphenolen, Eiweißen und Fetten hatten, gegen Laugen, Säuren und Cellulasen ausreichend beständig, autoklavierbar, mit Dampf sterilisierbar und durch Reinigungsmittel auch bei Dauergebrauch regenerierbar waren.

So haben Crossflow-Filtrationen von Maische gezeigt, daß die erfindungsgemäß verwendeten Mikrofiltrationsmembranen aus vernetztem Cellulosehydrat, selbst nach 6-wöchigem Betrieb bei regelmäßigen Regenerierungen mit 1 M Natronlauge mit praktisch der gleichen Leistung zu betreiben waren. Nach der Regenerierung wurden wieder Flußraten von mehr als 95 % des Anfangswertes erreicht. Die Regenerierungen wurden bei einem Abfall der Flußrate auf 90 % des Ausgangswertes durchgeführt. Ihre Häufigkeit ist bekanntlich von der Modulbauform und Betriebsweise der Crossflow-Filtrationsanlage abhängig.

Langzeitversuche haben gezeigt, daß die Membranen aus Cellulosehydrat nur eine sehr geringe Abnahme der Filtrationsleitung nach längerer Filtrationszeit zeigen, was vor allem auf die geringe Wechselwirkung des Membranmaterials mit den Inhaltsstoffen des zu filtrierenden Mediums zurückzuführen ist. Der immense Vorteil, den dieser Effekt für die Praxisanwendung darstellt, ergibt sich aus der in der Summe höheren Leistung an sich, aus weniger Reinigungszyklen, d. h. weniger Stillstandszeiten, aus einer bessereren Effizienz der Reinigung und aus einem geringeren Chemikalienverbrauch.

Darüber hinaus eignen sich die vernetzten Ultrafiltrationsmembranen erfindungsgemäß in besonderer Weise für die Aufkonzentrierung von wäßrigen Ölemusionen. Der Volumsreduktion von Ölemusionen kommt insofern eine wirtschaftliche Bedeutung zu, als ihre Entsorgung durch Verbrennung umso kostspieliger ist, je niedriger ihr Ölgehalt ist. Sehr gute Egebnisse bei der Behandlung von neutralen Ölemulsionen, wie sie beispielsweise im Kondensat von Kompressoren anfallen, werden beispielsweise mit Ultrafiltrationsmembranen aus Celluloseacetat erreicht. Diese sind jedoch wegen ihrer Alkaliempfindlichkeit ebensowenig wie unvernetzte Cellulosehydratmembranen bei stark alkalischen Emulsionen einsetztbar, wie sie beispielsweise verbrauchte Entfettungsbäder darstellen. Derartige Entfettungsbäder werden zur Entölung von Metallteilen heute praktisch ausschließlich anstelle der früher üblichen organischen Lösungsmittel eingesetzt.

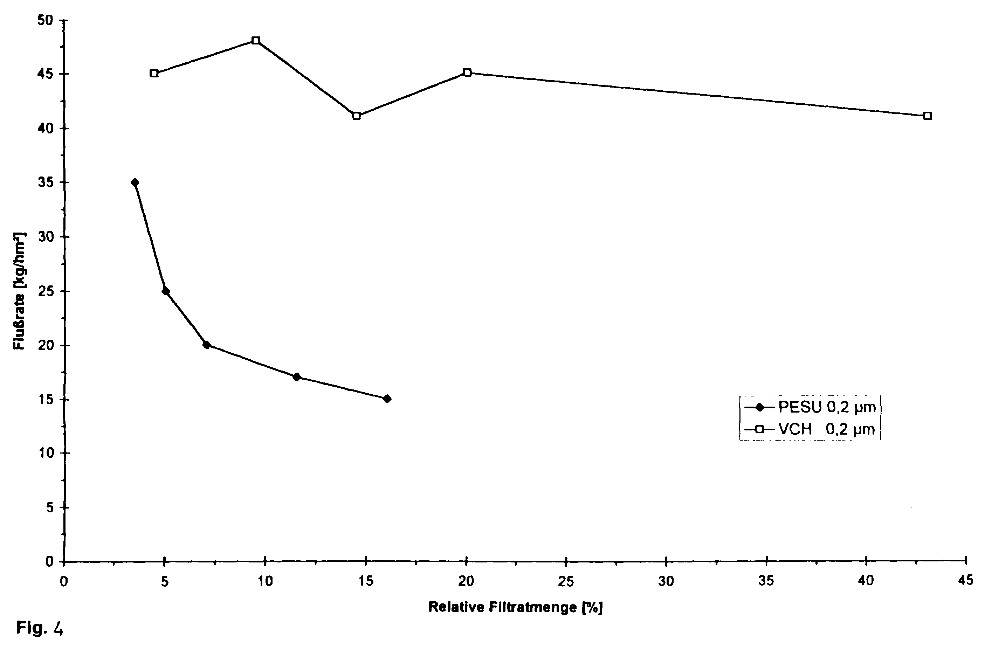

Die Erfindung wird anhand der nachstehenden Ausführungsbeispiele und der Figuren 1 bis 5 näher erläutert. Dabei zeigt

Fig. 1 die Massenzunahme dM (%) von Cellulosehydrat-Mikrofiltrationsmembranen nach Behandlung mit wäßrigen Lösungen von 5-Ethyl-1.3-Diglycidyl-5-Methylhydantoin verschiedener Konzentrationen bei Raumtemperatur in Abhängigkeit von der Reaktionszeit,

Fig. 2, die Flächenquellung Q von mit 5-Ethyl-1,3-Diglycidyl-5-Methylhydantoin vernetzten Cellulosehydrat-Mikrofiltrationsmembranen nach einstündiger Behandlung mit 10 % iger wäßriger Natriumhydroxidlösung in Abhängigkeit vom Vernetzungsgrad,

Fig. 3, den Massenverlust MV (%) von mit 5-Ethyl-1,3-Diglycidyl-5-Methylhydantoin vernetzten Cellulosehydrat-Mikrofiltrationsmembranen nach einstündiger Behandlung mit 10 % iger wäßriger Natriumhydroxidlösung in Abhängigkeit vom Vernetzungsgrad,

Fig. 4 die graphische Darstellung der Flußrate von 0,2 µm Mikrofiltrationsmembranen aus vernetztem Cellulosehydrat (VCH) und aus Polyethersulfon (PESU) als Funktion der Filtratmenge und

Fig. 5 die graphische Darstellung der Flußrate von 0,45 µm Mikrofiltrationsmembranen aus vernetztem Cellulosehydrat (VCH) und aus Polyethersulfon (PESU) als Funktion der Anzahl Filtrationszyklen

Beispiel 1.

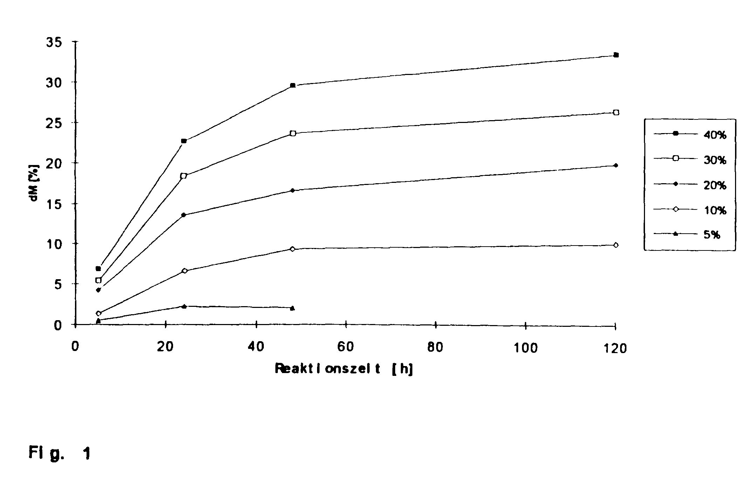

Gewogene, unverstärkte handelsübliche Cellulosehydrat-Mikrofiltrationsmembranen der nominellen Porengröße 0.45 µ (Typ SM 116 06, Fa. Sartorius AG) mit einem Durchmesser von 50 mm wurden in einem Becherglas bei Raumtemperatur zwischen 5 Stunden und 5 Tagen mit einem Überschuß wäßriger Lösungen von 5-Ethyl-1,3-Diglycidyl-5-Methylhydantoin $M_v$ = 254 Dalton) behandelt. Die Konzentration des Diepoxids wurde im Bereich zwischen 5 und 40 Gew.% variiert, die Lösungen waren einheitlich 0.1 normal in bezug auf Natronlauge. Nach der Vernetzung wurden die Proben mit RO-Wasser gespült, 30 min bei 105°C getrocknet und die Massenzunahme bestimmt. Die Ergebnisse sind in Fig. 1 dargestellt, wobei auf der Abszisse die Reaktionszeit in h und auf der Ordinate der Massenverlust dM in % aufgetragen sind.

Beispiel 2.

Die gewogenen, nach Beispiel 1 erhaltenen Membranen sowie eine unvernetzte Vergleichsprobe wurden folgendem Test unterzogen: sie wurden im wasserbenetzten Zustand eine Stunde in einer 10 Gew.%igen wäßrigen Natriumhydroxidlösung von 7 °C gelagert und anschließend zur Bestimmung der Flächenquellung glatt auf eine Glasplatte gelegt und vermessen. Da die Quellung generell anisotrop erfolgt, haben die Membranen im gequollenen Zustand eine elliptische Form. Die Flächenquellung Q in % ergibt sich aus den gemessenen Achsen a und b der Ellipse umd dem Durchmesser d der ursprünglich kreisförmigen Membranen nach folgender Beziehung:

$$Q = (a*b/d^2-1)*100 \ (\%)$$

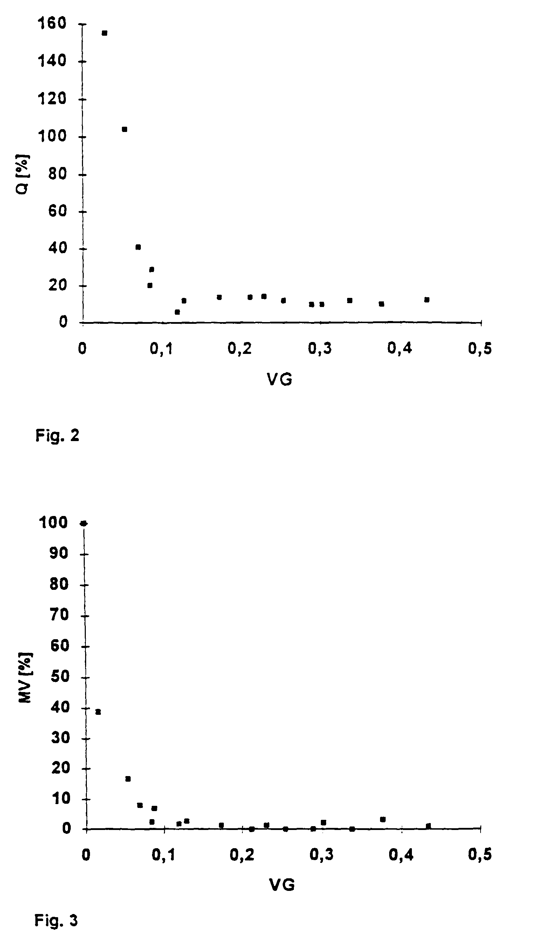

Die Meßergebnisse sind in Fig. 2 graphisch dargestellt, wobei auf der Abszisse der Vernetzungsgrad der jeweiligen Probe, der sich bei dem verwendeten Diepoxid durch Multiplikation der Werte von dM mit dem Faktor 0.0128 ergibt, und auf der Ordinate die Flächenquellung Q aufgetragen ist.

Anschließend wurden die Membranen für 5 min in 2 %ige Essigsäure überführt und bewegt, 5 min in fließendem RO-Wasser gespült, mit Aceton nachgespült und 5 min bei 80°C getrocknet, gewogen und der Massenverlust in bezug auf die vernetzte Ausgangsmembran bestimmt.

Die Ergebnisse sind in Fig. 3 graphisch dargestellt, wobei auf der Abszisse wieder der Vemetzungsgrad und auf der Ordinate der prozentuale Massenverlust MV bei der Laugenbehandlung aufgetragen ist.

Die unvernetzte Vergleichsprobe konnte nicht untersucht werden, weil sie bis auf kaum sichtbare Reste verschwunden war.

Beispiel 3.

Entsprechend den Bedingungen von Beispiel 1 wurde die Vernetzung mit 20 % 5-Ethyl-1,3-Diglycidyl-5-Methylhydantoin in 0.1 n Natriumhydroxid durchgeführt und parallel dazu mit einer Vernetzungsflotte, die zusätzlich 2 % wasserfreies Natriumsulfat enthielt (bei dieser Konzentration ist gerade noch keine merkliche Trübung der Flotte durch ausgesalztes Diepoxid erkennbar). Es wurden die in der Tabelle 1 angegebenen Vernetzungsgrade VG festgestellt:

Tabelle 1:

| Vernetzungsgrade mit und ohne Zusatz von Natriumsulfat | | |
|---|---|---|
| Vernetzungsdauer (h) | VG ohne Natriumsulfat | VG mit Natriumsulfat |
| 24 | 0.17 | 0.23 |
| 48 | 0.22 | 0.32 |

Beispiel 4.

Eine Cellulosehydrat-Ultrafiltrationsmembran wurde analog Beispiel 3 für eine Dauer von 72 Stunden in Gegenwart von Natriumsulfat vernetzt. Vernetzte und die unvernetzte Membranproben wurden bei 4 bar Prüfdruck in einer statischen Druckzelle auf ihre hydraulische Permeabilität P sowie in einer Rührzelle auf ihre mittlere Filtrationsleistung $D_{cyt}$ und mittlere Rückhalterate $R_{cyt}$ bei der Aufkonzentrierung von Cytochrom C (Filtration einer Cytochrom C - Lösung von 1 mg/ml in 0.9 %iger wäßriger Kochsalzlösung bis zu einem Restvolumen von 0.5 ml) geprüft. Folgende in der Tabelle 2 dargestellte Ergebnisse wurden erhalten:

Tabelle 2:

| Hydraulische Permeabilität P, mittlere Filtrationsleistung $D_{cyt}$ und mittlere Rückhalterate $R_{cyt}$ bei der Aufkonzentrierung von Cytochrom C an vernetzten und unvernetzten Cellulosehydrat-Ultrafiltrationsmembranen | | | |
|---|---|---|---|
| | P (ml/cm$^2$min bar) | $D_{cyt}$ (ml/cm$^2$min bar) | $R_{cyt}$ (%) |
| unvernetzt | 0.245 | 0.098 | 79.0 |
| vernetzt | 0.185 | 0.088 | 90.6 |

Beispiel 5.

Eine vernetzte Mikrofiltrationsmembran nach Beispiel 1 mit einem Vernetzungsgrad von 0.05, eine vernetzte Ultrafiltrationsmembran nach Beispiel 4, entsprechende unvernetzte Vergleichsproben sowie eine handelsübliche Cellulosehydrat - Ultrafiltrationsmembran des Typs YM 30 (Fa. Amicon) wurden 24 h bei Raumtemperatur in einer Cellulaselösung (30 mg/ml Cellulase aus Trichoderma viride, 1.5 U/mg, Merck Best.Nr. 2324.0010, in 0.05 M Natriumacetat-Puffer pH 5.9) behandelt. Ergebnis: die vernetzten Proben waren vollständig vorhanden, die unvernetzten Vergleichsproben verschwunden. Von der Amicon-Membran war nur mehr das Verstärkungsmaterial vorhanden.

Beispiel 6.

Eine nach Beispiel 1 hergestellte vernetzte Mikrofiltrationsmembran mit einem Vernetzungsgrad von 0.15, eine nach Beispiel 4 hergestellte vernetzte Ultrafiltrationsmembran sowie eine unvernetzte Mikrofilter-Vergleichsprobe wurden mit pyrogenfreiem Wasser gespült und anschließend in pyregenfreiem Wasser (1 ml/cm$^2$ Membran) autoklaviert. In der Flüssigkeit (im folgenden Extrakt genannt) wurde anschließend unter Verwendung von Concept Pyrogel (Hersteller: Heamachem, St. Louis) in üblicher Weise ein Limulus-Test durchgeführt. Dazu wurde eine Verdünnungsreihe der Extrakte jeweils um den Faktor 10 hergestellt und die Proben nach Herstellervorschnft auf Pyrogene geprüft. Die Empfindlichkeit des Tests wurde mit E. coli Standard-Endotoxin ermittelt und für die quantitative Auswertung herangezogen. Da bei dem Test die Entstehung echter Pyrogene (Endotoxine) ausgeschlossen ist, entsprechen die erhaltenen Werte denjenigen Mengen an bei der Autoklavierung freigesetzten Pseudopyrogenen, die in ihrer Wirkung auf das verwendete Limulus-Lysat den angegebenen Gehalt en an Standard-Endotoxin entsprechen. Es wurden folgende in der Tabelle 3 wiedergegebenen Werte erhalten (Pseudopyrogengehalt entsprechend pg Standard-Endotoxin/ml):

Tabelle 3:

| Pseudopyrogengehalte in bei Autoklavierung unterschiedlicher Membranen erhaltenen Extrakten, entsprechend pg/ml Standard-Endotoxin aus E.coli. | | | |
|---|---|---|---|
| | unvernetzt | Mikrofilter vernetzt | Ultrafilter vernetzt |
| 1. Autoklavierung | 1000-10000 | 10-100 | 10-100 |
| 2. Autoklavierung | 100-1000 | <10 | 10-100 |
| 3. Autoklavierung | 100-1000 | <10 | 10-100 |

Beispiel 7.

100 g gemahlenes Malz wird in Wasser suspendiert und 60 Minuten auf 55° C, 45 Minuten auf65°C und anschließend 15 Minuten auf 75° C unter Rühren im Wasserbad erhitzt. Die so erhaltene Maische wird für jeden Versuch frisch angesetzt und sofort verwendet.
200 ml suspendierte Maische werden in eine thermostatisierbare mit Magnetrührern ausgerüstete Rührzelle der Sartorius AG (Typ SM 16526) gefüllt und bei 1000 Umdrehungen pro Minute und 0,3 bar Differenzdruck filtriert. Die effektive Filterfläche beträgt 12,5 cm$^2$. Das Filtrat wird aufgefangen und seine Masse oder sein Volumen in Abhängigkeit von der Zeit bestimmt. Die Filtration wird solange fortgeführt, bis durch die Aufkonzentrierung der Maische keine vollständige Durchmischung in der Rührzelle mehr stattfindet oder die Flußrate einen bestimmten Wert unterschreitet. Verglichen werden Membranen aus Polyethersulfon (PESU) und vernetztem Cellulosehydrat (VCH) mit einer mittleren Porengröße von 0.2. μm. Die Filtrationsleistung der Polyethersulfonmembran sinkt schon nach 15 % rel. Filtratvolumen auf 46 % des Anfangswertes ab und die Filtration wird abgebrochen, während die VCH Membran eine annähernd konstante Filtrationsleistung aufweist und eine Aufkonzentrierung auf nahezu den Faktor 2 erlaubt.

Bei der Membran aus vernetztem Cellulosehydrat handelt es sich um eine mit 5-Ethyl-1,3-Diglycidyl-5-Methyhydantoin bis zu einer Massenzunahme von 10 % vernetzte Cellulosehydratmembran (VG = 0,1). Bei der PESU-Membran handelt es sich um eine unverstärkte hydrophile Membran der Firma Sartorius AG mit der Typenbezeichnung SM 15107.

Tabelle 4:

| Flußraten als Funktion des Filtratvolumens bei der statischen Filtration von Maische an 0,2 μm Mikrofiltrations-Membranen aus Polyethersulfon (PESU) und vernetztem Cellulosehydrat (VCH) | | |
|---|---|---|
| Relative Filtratmenge [%] | Flußrate [kg/h∗m$^2$] | |
| | PESU 0,2 μm | VCH 0,2 μm |
| 3,5 | 35 | 45 |
| 4,5 | | |
| 5 | 25 | |
| 7 | 20 | 48 |
| 9,5 | | |

EP 0 762 929 B1

Tabelle 4: (fortgesetzt)

| Flußraten als Funktion des Filtratvolumens bei der statischen Filtration von Maische an 0,2 μm Mikrofiltrations-Membranen aus Polyethersulfon (PESU) und vernetztem Cellulosehydrat (VCH) | | |
|---|---|---|
| Relative Filtratmenge [%] | Flußrate [kg/h∗m$^2$] | |
| | PESU 0,2 μm | VCH 0,2 μm |
| 11,5 | 17 | 41 |
| 14,5 | | |
| 16 | 15 | 45 |
| 20 | | 41 |

Beispiel 8.

Maische, hergestellt wie in Beispiel 7 wird in der in Beispiel 7 beschriebenen Art und Weise zur Filtration benutzt.

Nach der Filtration wird die Maische entfernt und die Membran in der Rührzelle mit Wasser unter Rühren 10 Minuten bei 70° C behandelt, nochmals mit Wasser gespült und die Filtration mit frischer Maische wie in Beispiel 7 fortgesetzt. Bei jeder Filtration wird die mittlere Filtrationsgeschwindigkeit ermittelt.

Verglichen werden eine Polysulfonmembran (PESU) und eine Membran aus vernetztem Cellulosehydrat (VCH) jeweils mit einer mittleren Porengröße von 0.45 μm. Es zeigt sich, daß die Filtrationsleistung der Polyethersulfonmembran mit jedem Zyklus stark abnimmt und auch durch eine Reinigung mit NaOH (10 min, 70°C) nur unwesentlich ansteigt, während die VCH Membran nur einen geringfügigen Abfall der Leistung zeigt. Nach einer Reinigung mit NaOH wird der Anfangswert wieder erreicht.

Bei der Membran aus vernetztem Cellulosehydrat handelt es sich um eine mit 5-Ethyl-1,3-Diglycidyl-5-Methylhydantoin bis zu einer Massenzunahme von 15 % vernetzte Cellulosehydratmembran (VG = 0,2). Bei der PESU-Membran handelt es sich um eine vliesverstärkte, mit verseiftem Polyvinylacetat nachbehandelte hydrophile Membran der Firma Sartorius AG mit der Typenbezeichnung SM 15506 ZN 581 R3.

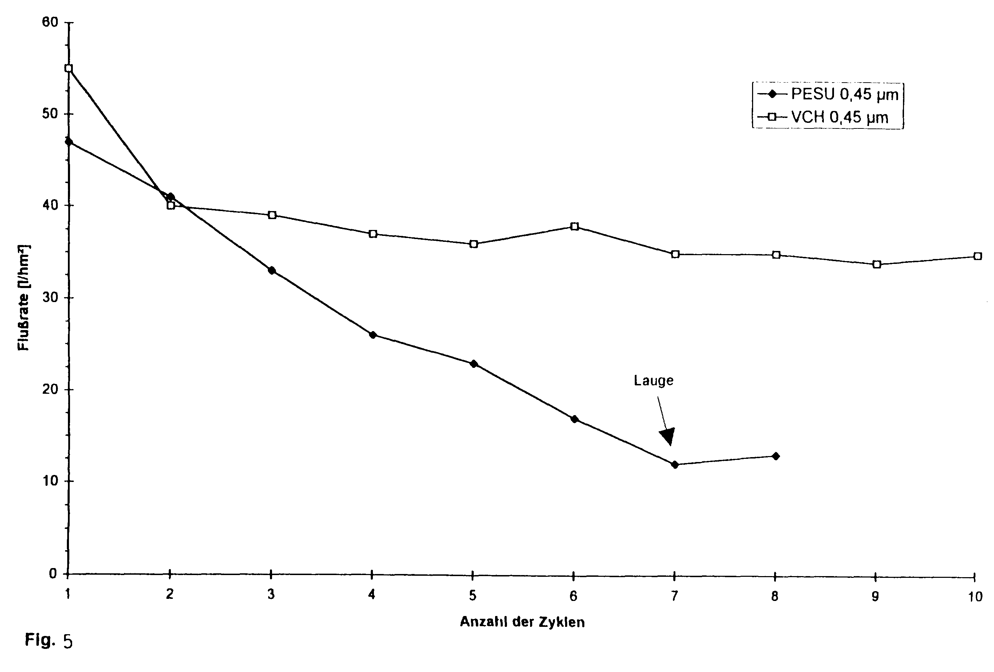

In der Tabelle 5 und in Fig. 5 sind die erhaltenen Daten dargestellt.

Tabelle 5:

| Flußraten als Funktion der Anzahl Filtrationszyklen bei der Filtration von Maische an 0,45 μm Mikrofiltrationsmembranen aus Polyethersulfon (PESU) und vernetztem Cellulosehydrat (VCH) in der Rührzelle | | |
|---|---|---|
| Anzahl der Zyklen | Flußrate [1/h*m$^2$] | |
| | VCH 0.45 μm | PESU 0.45 μm |
| 1 | 55 | 47 |
| 2 | 40 | 41 |
| 3 | 39 | 33 |
| 4 | 37 | 26 |
| 5 | 36 | 23 |
| 6 | 38 | 17 |
| 7 | 35 | 12 |
| 8 | 35 | 13 |
| 9 | 34 | |
| 10 | 35 | |
| 11 (nach NaOH-Reinigung) | 40 | |

Beispiel 9.

Eine vernetzte Ultrafiltrationsmembran nach Beispiel 4 wurde zur Aufkonzentrierung des Öls in einem erschöpften Entfettungsbad von pH 14 benutzt. Die Filtration wurde in einer Rührzelle bei 4 bar und Raumtemperatur durchgeführt. Die Filtrationsleistung betrug zu Beginn 30 l/m$^2$ h und sank bei Erreichen eines Konzentrierungsfaktors von 10 auf 5 l/m$^2$ h. Die Membranoberfläche ließ sich unter fließendem Wasser vollständig von Ölresten reinigen. Anschließend wurde die Membrane 35 Tage in dem alkalischen Entfettungsbad gelagert und der Filtrationsversuch wiederholt. Die Filtrationsleistung betrug in diesem Fall 29 l/m$^2$ h.

Die in der Erfindungsbeschreibung verwendeten prozentualen Angaben sind Gewichts-%-Angaben, sofern im Text nichts anderes ausgeführt ist.

**Patentansprüche**

1.    Hydrophile, poröse Ultrafiltrations- und Mikrofiltrationsmembranen aus vernetztem Cellulosehydrat,
dadurch gekennzeichnet, daß die Membranen

mit Diepoxiden einer Wasserlöslichkeit von wenigstens 0.2 mol/1 vernetzt sind, einen Vernetzungsgrad von 0,05 bis 0.4 haben,
eine Hydrophilie besitzen, die nicht geringer ist als die Hydrophilie der Ausgangsmembranen aus Cellulosehydrat und
einen Massenverlust von weniger als 10 % nach einstündiger Behandlung mit 10 %iger Natronlauge bei 7°C aufweisen.

2.    Membranen nach Anspruch 1,
dadurch gekennzeichnet, daß die Membranen

einen Vernetzungsgrad von 0.12 bis 0.25 haben und
einen Massenverlust von weniger als 5 % nach einstündiger Behandlung mit 10 %iger Natronlauge bei 7°C aufweisen.

3.    Membranen nach den Ansprüchen 1 und 2,
dadurch gekennzeichnet, daß die Membranen
mit 5-Ethyl-1,3-Diglycidyl-5-Methylhydantoin vernetzt sind.

4.    Membranen nach den Ansprüchen 1 bis 3,
dadurch gekennzeichnet, daß die Membranen
unverstärkt und verstärkt sind.

5.    Verfahren zur Herstellung hydrophiler, poröser Membranen aus vernetztem Cellulosehydrat gemäß den Ansprüchen 1 bis 4, in dem Ultrafiltrations- und Mikrofiltrationsmembranen aus Cellulosehydrat in einer wässrigen alkalischen Vernetzungsflotte mit einem Vernetzer in Kontakt gebracht werden,
dadurch gekennzeichnet, daß
als Vernetzungsflotte eine 0.2 bis 2, vorzugsweise eine 0.28 bis 0.8 molare Lösung eines Diepoxids verwendet wird. die eine starke Lauge in einer Konzentration von 0.05 bis 0.3 Äquivalente/l enthält und die Reaktionstemperatur zwischen 0 und 50°C beträgt.

6.    Verfahren nach Anspruch 5,
dadurch gekennzeichnet, daß
die Ultrafiltrations- und Mikrofiltrationsmembranen aus Cellulosehydrat in Rollenform mit der Vernetzungsflotte in Kontakt gebracht werden.

7.    Verfahren zur Herstellung hydrophiler, poröser Membran aus vernetztem Cellulosehydrat gemäß den Ansprüchen 1 bis 4, in dem Mikrofiltrationsmembranen aus Cellulosehydrat mit einer den Vernetzter enthaltenden wässrigen alkalischen Vemetzungsflotte in Kontakt gebracht werden ,
dadurch gekennzeichnet, daß
die Membranen mit der Vernetzungsflotte imprägniert werden und zwischen 30 Sekunden und 10 Minuten auf eine Temperatur zwischen 80 und 150°C, vorzugsweise zwischen 100 und 120°C erhitzt werden, wobei als Vemetzungsflotte eine 0.2 bis 2, vorzugsweise eine 0.28 bis 0.8 molare Lösung eines Diepoxids verwendet wird, die eine starke Lauge in einer Konzentration von 0.05 bis 0.3 Äquivalente/l enthält.

**8.** Verfahren nach den Ansprüchen 5 bis 7,
dadurch gekennzeichnet, daß
die Vemetzungsflotte zusätzlich ein anorganisches Neutralsalz, vorzugsweise Natriumsulfat enthält bis zu einer Konzentration, bei der eine Trübung der Vernetzungsflotte einsetzt.

**9.** Verfahren nach den Ansprüchen 5 bis 8,
dadurch gekennzeichnet, daß
die Membranen mit einer Vemetzungsflotte in Kontakt gebracht werden, die 5-Ethyl-1,3-Diglycidyl-5-Methylhydantoin als Diepoxid enthält.

**10.** Verwendung der Membranen gemäß den Ansprüchen 1 bis 4 zur Filtration wässriger proteinhaltiger Lösungen.

**11.** Verwendung der Membranen gemäß den Ansprüchen 1 bis 4 zur Filtration wässriger Medien und Getränke biologischen und biotechnologischen Ursprungs.

**12.** Verwendung der Mikrofiltrationsmembranen gemäß den Ansprüchen 1 bis 4 und 11 für die Filtration von Maische, Bier und Wein, wobei die Membranen vorzugsweise einen Porengrößenbereich zwischen 0,1 und 0,8 μm aufweisen.

**13.** Verwendung der Ultrafiltrationsmembranen gemäß den Ansprüchen 1 bis 4 zur Filtration von Öl/Wasser-Gemischen.

**14.** Verwendung der Membranen gemäß den Ansprüchen 1 bis 4 und 10 bis 13 zur Crossflow-Filtration.

**Claims**

**1.** Hydrophilic porous ultrafiltration and microfiltration membranes of cross-linked cellulose hydrate, characterised in that the membranes are cross-linked with diepoxides of a water solubility of at least 0.2 mol/l, have a cross-linking degree of 0.5 to 0.4, have a hydrophily which is not lower than the hydrophily of the starting membranes of cellulose hydrate and have a mass loss of less than 10% after a one hour treatment with 10% caustic soda at 7°C.

**2.** Membranes according to claim 1, characterised in that the membranes have a cross-linking degree of 0.12 to 0.25 and a mass loss of less than 5% after a one hour treatment with 10% caustic soda at 7°C.

**3.** Membranes according to claims 1 and 2, characterised in that the membranes are cross-linked with 5-ethyl-1,3-digylcidyl-5-methylhydantoin.

**4.** Membranes according to claims 1 to 3, characterised in that the membranes are unreinforced and reinforced.

**5.** Method of producing hydrophilic porous membranes from cross-linked cellulose hydrate according to claims 1 to 4, in which ultrafiltration and microfiltration membranes of cellulose hydrate are brought into contact with a cross-linking agent in an aqueous alkaline cross-linking solution, characterised in that as cross-linking solution there is used a 0.2 to 2, preferably 0.28 to 0.8, molar solution of a diepoxide, which contains a strong lye in a concentration of 0.05 to 0.3 equivalent/l, and the reaction temperature is between 0 and 50°C.

**6.** Method according to claim 5, characterised in that the ultrafiltration and microfiltration membranes of cellulose hydrate in roll shape are brought into contact with the cross-linking solution.

**7.** Method of producing hydrophilic porous membranes of cross-linked cellulose hydrate according to claims 1 to 4, in which microfiltration membranes of cellulose hydrate are brought into contact with an aqueous alkaline cross-linking solution containing the cross-linking agent, characterised in that the membranes are impregnated with the cross-linking solution and are heated for between 30 seconds and 10 minutes to a temperature between 80 and 150°C, preferably between 100 and 120°C, wherein a 0.2 to 2, preferably a 0.28 to 0.8, molar solution of a diepoxide, which contains a strong lye in a concentration of 0.05 to 0.3 equivalent/l, is used as cross-linking solution.

**8.** Method according to claims 5 to 7, characterised in that the cross-linking solution additionally contains an inorganic neutral salt, preferably sodium sulfate, up to a concentration at which a clouding of the cross-linking solution sets in.

9. Method according to claims 5 to 8, characterised in that the membranes are brought into contact with a cross-linking solution which contains 5-ethyl-1,3-digylcidyl-5-methylhydantoin as diepoxide.

10. Use of the membranes according to claims 1 to 4 for filtration of aqueous solutions containing protein.

11. Use of the membranes according to claims 1 to 4 for filtration of aqueous media and beverages of biological and biotechnological origin.

12. Use of microfiltration membranes according to claims 1 to 4 and 11 for the filtration of mash, beer and wine, wherein the membranes preferably have a pore size range between 0.1 and 0.8 microns.

13. Use of the membranes according to claims 1 to 4 for filtration of oil-water mixtures.

14. Use of the membranes according to claims 1 to 4 and 10 to 13 for crossflow filtration.


**Revendications**

1. Membranes poreuses hydrophiles d'ultrafiltration et de microfiltration en hydrate de cellulose réticulé, caractérisées en ce que les membranes

   sont réticulées avec des diépoxydes de solubilité dans l'eau au moins égale à 0,2 mole/l,
   ont un degré de réticulation de 0,05 à 0,4,
   possèdent une hydrophilie qui n'est pas inférieure à l'hydrophilie des membranes de départ en hydrate de cellulose et
   présentent une perte de masse de moins de 10 % après traitement pendant une heure avec de la lessive de soude à 10 %, à 7°C.

2. Membranes suivant la revendication 1, caractérisées en ce que les membranes

   ont un degré de réticulation de 0,12 à 0,25 et
   présentent une perte de masse de moins de 5 % après traitement pendant une heure avec de la lessive de soude à 10 %, à 7°C.

3. Membranes suivant les revendications 1 et 2,
   caractérisées en ce que les membranes
   sont réticulées avec de la 5-éthyl-1,3-diglycidyl-5-méthylhydantoïne.

4. Membranes suivant les revendications 1 à 3,
   caractérisées en ce que les membranes
   sont non renforcées et renforcées.

5. Procédé de production de membranes hydrophiles poreuses en hydrate de cellulose réticulé suivant les revendications 1 à 4, dans lequel des membranes d'ultrafiltration et de microfiltration en hydrate de cellulose sont mises en contact avec un agent réticulant dans un bain de reticulation alcalin aqueux,
   caractérisé en ce que
   on utilise comme bain de réticulation une solution 0,2 à 2 molaire, de préférence 0,28 à 0,8 molaire d'un diépoxyde qui contient une lessive alcaline forte à une concentration de 0,05 à 0,3 équivalent/1 et la température de réaction se situe entre 0 et 50°C.

6. Procédé suivant la revendication 5,
   caractérisé en ce que
   les membranes d'ultrafiltration et de microfiltration en hydrate de cellulose sont mises en contact sous une forme en rouleau avec le bain de réticulation.

7. Procédé de production d'une membrane hydrophile poreuse en hydrate de cellulose réticulé suivant les revendications 1 à 4, dans lequel les membranes de microfiltration en hydrate de cellulose sont mises en contact avec un bain aqueux alcalin de réticulation contenant l'agent réticulant,

caractérisé en ce que

les membranes sont imprégnées du bain de réticulation et sont chauffées entre 30 secondes et 10 minutes à une température comprise entre 80 et 150°C, de préférence entre 100 et 120°C, le bain de réticulation utilisé étant une solution 0,2 à 2 molaire, de préférence 0,28 à 0,8 molaire d'un diépoxyde qui contient une lessive alcaline forte à une concentration de 0,05 à 0,3 équivalent/l.

8.  Procédé suivant les revendications 5 à 7,
    caractérisé en ce que
    le bain de réticulation contient en outre un sel inorganique neutre, de préférence du sulfate de sodium jusqu'à une concentration à laquelle un trouble du bain de réticulation s'amorce.

9.  Procédé suivant les revendications 5 à 8,
    caractérisé en ce que
    les membranes sont mises en contact avec un bain de réticulation qui contient comme diépoxyde de la 5-éthyl-1,3-diglycidyl-5-méthylhydantoïne.

10. Utilisation des membranes suivant les revendications 1 à 4 pour la filtration de solutions aqueuses contenant des protéines.

11. Utilisation des membranes suivant les revendications 1 à 4 pour la filtration de boissons et de milieux aqueux d'origine biologique et biotechnologique.

12. Utilisation des membranes de microfiltration suivant les revendications 1 à 4 et 11 pour la filtration de moût, de bière et de vin, les membranes présentant de préférence une plage de dimensions des pores de 0,1 à 0,8 µm.

13. Utilisation des membranes d'ultrafiltration suivant les revendications 1 à 4 pour la filtration de mélanges huile/eau.

14. Utilisation des membranes suivant les revendications 1 à 4 et 10 à 13 pour une filtration du type Crossflow.

EP 0 762 929 B1

Fig. 1

Fig. 2

Fig. 3

Fig. 4

Fig. 5